(19) **Europäisches Patentamt / European Patent Office / Office européen des brevets**

(11) **EP 2 946 284 B1**

(12) **FASCICULE DE BREVET EUROPEEN**

(45) Date de publication et mention de la délivrance du brevet:
**26.04.2017 Bulletin 2017/17**

(21) Numéro de dépôt: **14703138.9**

(22) Date de dépôt: **13.01.2014**

(51) Int Cl.:
*G06F 7/72* *(2006.01)*

(86) Numéro de dépôt international:
**PCT/FR2014/050054**

(87) Numéro de publication internationale:
**WO 2014/111647 (24.07.2014 Gazette 2014/30)**

(54) **PROCÉDÉ DE CRYPTOGRAPHIE COMPRENANT UNE OPÉRATION DE MULTIPLICATION PAR UN SCALAIRE OU UNE EXPONENTIATION**

KRYPTOGRAFISCHES VERFAHREN MIT EINEM BETRIEB DURCH MULTIPLIKATION MITTELS EINES SKALARS ODER EINER EXPONENTIATION

CRYPTOGRAPHY METHOD COMPRISING AN OPERATION OF MULTIPLICATION BY A SCALAR OR AN EXPONENTIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2013 FR 1350431**

(43) Date de publication de la demande:
**25.11.2015 Bulletin 2015/48**

(73) Titulaire: **Inside Secure**
**13590 Meyreuil (FR)**

(72) Inventeurs:
- **FEIX, Benoît**
  **F-13400 Aubagne (FR)**
- **VERNEUIL, Vincent**
  **22529 Hamburg (DE)**
- **CLAVIER, Christophe**
  **F-87800 Rilhac Lastours (FR)**

(74) Mandataire: **de Roquemaurel, Bruno et al**
**OMNIPAT**
**24 Place des Martyrs de la Résistance**
**13100 Aix en Provence (FR)**

(56) Documents cités:
**US-A1- 2009 214 023**

- **TRICHINA E ET AL: "IMPLEMENTATION OF ELLIPTIC CURVE CRYPTOGRAPHY WITH BUILT-IN COUNTER MEASURES AGAINST SIDE CHANNEL ATTACKS", CRYPTOGRAPHIC HARDWARE AND EMBEDDED SYSTEMS. INTERNATIONALWORKSHOP, XX, XX, 13 août 2002 (2002-08-13), pages 98-113, XP001160524,**
- **MICHAEL TUNSTALL ED - COLIN BOYD ET AL: "Random Order m-ary Exponentiation", 1 juillet 2009 (2009-07-01), INFORMATION SECURITY AND PRIVACY, SPRINGER BERLIN HEIDELBERG, BERLIN, HEIDELBERG, PAGE(S) 437 - 451, XP019120428, ISBN: 978-3-642-02619-5 section 5 "Random Order Exponentiation" et Annexe A "Worked Example"**
- **DARREL HANKERSON ET AL: "Elliptic curve arithmetic", GUIDE TO ELLIPTIC CURVE CRYPTOGRAPHY, SPRINGER VERLAG, BERLIN, DE, 1 janvier 2004 (2004-01-01), pages 75-113, XP002395321,**

## Description

La présente invention concerne la mise en oeuvre de la cryptographie à courbes elliptiques dans un dispositif électronique, et plus particulièrement un procédé de calcul du résultat de la multiplication par un scalaire d'un point appartenant à une courbe elliptique.

Divers procédés de cryptographie connus basés sur les courbes elliptiques reposent sur l'opération de multiplication scalaire, qui a pour expression mathématique : [k]·P = P [+] P [+] ... [+] P (k fois), P étant un point choisi sur une courbe elliptique, k étant un nombre entier, et "[+]" étant l'opérateur d'addition appliqué à des points de la courbe elliptique. Le nombre k est par exemple une clé privée et le point résultat [k]·P de cette opération, ou l'une des coordonnées affines du point résultat peut être utilisé comme clé publique. En effet, connaissant le résultat [k]·P et les coordonnées du point P, il peut être extrêmement difficile de trouver la valeur du nombre k. Cette opération est utilisée par exemple lors d'un calcul de signature, ou pour générer une clé de cryptographie, ou encore pour chiffrer un message. Cette opération est mise en oeuvre par divers algorithmes de cryptographie basés sur les courbes elliptiques, tels que l'algorithme ECDSA ("Elliptic Curve Digital Signature Algorithm"), ECDH (Elliptic Curve Diffie-Hellman), ECIES (Elliptic Curve Integrated Encryption Scheme), etc.

Les opérations entre points d'une courbe elliptique se ramènent à des opérations sur les coordonnées de ces points dans des corps de Galois de la forme $F_q$, q étant soit un nombre premier p, soit une puissance de 2 (de la forme $2^m$). L'opération de multiplication scalaire est généralement décomposée en une série d'opérations d'addition et de doublement de points. Ainsi, il est connu d'exécuter un calcul de multiplication scalaire au moyen de l'algorithme "double & add" ("doubler et additionner") A1 ou A1' figurant en Annexe I. L'algorithme A1 est dit "de gauche à droite" car les premières étapes de la boucle de calcul commencent par traiter les bits de poids fort du nombre scalaire k, pour aller vers les bits de poids faible. L'algorithme A1' est dit "de droite à gauche" car les premières étapes de la boucle de calcul commencent par traiter les bits de poids faible du nombre scalaire, pour aller vers les bits de poids fort.

Ces algorithmes comprennent pour chaque itération, c'est-à-dire chaque bit de l'exposant, une addition de deux points identiques R d'une courbe elliptique, et si le bit du scalaire traité par l'itération est égal à 1, une addition du point R avec un autre point P de la courbe elliptique. Il est généralement fait appel à des fonctions différentes pour exécuter chacune de ces opérations, l'addition de deux points identiques étant exécutée au moyen d'une fonction de doublement ou fonction "DOUBLE", tandis que l'addition de deux points différents est exécutée au moyen d'une fonction d'addition ou fonction "ADD". Cette distinction est due au fait qu'il est possible de calculer plus rapidement P [+] Q lorsque les points P et Q sont identiques que dans le cas contraire, au moyen de la fonction DOUBLE. Dans certains systèmes de coordonnées, l'addition de deux points identiques peut conduire à une division par zéro. Un autre mode de calcul est donc nécessaire.

Dans un dispositif électronique de type carte à puce, le calcul cryptographique est généralement exécuté par un processeur spécifique, tel un coprocesseur arithmétique ou un crypto-processeur. Le calcul de "[k]·P", et plus particulièrement l'exécution d'additions de points d'une courbe elliptique, occupe la majeure partie du temps de calcul du processeur relativement au temps total de génération d'une clé, de calcul d'une signature, de vérification de signature, ou d'une opération de chiffrement ou de déchiffrement. Le fait d'utiliser alternativement la fonction DOUBLE ou la fonction ADD en fonction du type de calcul à effectuer permet donc d'optimiser le temps de calcul global de chiffrement, de déchiffrement, de signature ou de vérification de signature.

Toutefois, l'utilisation de deux fonctions différentes DOUBLE et ADD conduit à une fuite d'information détectable par analyse SPA ("Simple Power Analysis"), c'est-à-dire par analyse de la consommation électrique de la carte. La fonction DOUBLE ayant un temps d'exécution plus court que la fonction ADD, il est possible de différencier ces deux opérations en observant la courbe de consommation électrique du composant. On entend par "consommation électrique" toute grandeur physique observable trahissant le fonctionnement du composant électronique exécutant l'opération, notamment le courant électrique consommé ou le rayonnement électromagnétique du composant. Ainsi, sur une courbe de consommation électrique d'un composant exécutant l'algorithme A1, il est possible de distinguer le profil de consommation de la fonction DOUBLE et celui de la fonction ADD. Une opération DOUBLE suivie d'une opération ADD (étape 2.1 suivie d'une étape 2.2) révèle que le bit du nombre scalaire k est égal à 1 puisque le branchement conditionnel vers l'étape 2.2 nécessite que la condition $k_s = 1$ soit réalisée. Inversement, une opération DOUBLE suivie d'une autre opération DOUBLE (étape 2.1 suivie d'une autre étape 2.1) révèle que le bit $k_s$ du nombre scalaire est égal à 0. Les bits du nombre scalaire k peuvent ainsi être découverts les uns après les autres par une simple observation de la courbe de consommation électrique.

Pour pallier cet inconvénient, les étapes 2.1 et 2.2 des algorithmes A1 et A1' pourraient si possible être effectuées au moyen de la fonction ADD uniquement, sans utiliser la fonction DOUBLE. Toutefois, une analyse plus fine de la consommation électrique permettrait de distinguer l'étape 2.1 de l'étape 2.2 car l'algorithme A1 ou A1' n'est pas régulier. En effet, dans ce cas, le temps s'écoulant entre deux additions successives n'est pas le même lorsque les deux additions correspondent à l'exécution successive de deux étapes 2.1 (bit $k_s$ égal à 0) ou correspondent à l'exécution d'une étape 2.1 suivie d'une étape 2.2 (bit $k_s$ à 1). Un attaquant pourrait ainsi "zoomer" sur la partie de la courbe de consommation s'étendant entre les additions et observerait une dissymétrie temporelle révélatrice du branchement conditionnel et donc de la valeur du bit du nombre scalaire.

L'algorithme A2 figurant en Annexe I, appelé "Montgomery Ladder", permet également de réaliser un calcul de multiplication scalaire. Cet algorithme consiste à chaque itération à effectuer deux additions, l'une appliquée à deux points différents, et l'autre appliquée à deux points identiques et pouvant donc être effectuée par une addition ou une opération de doublement. A chaque itération, l'un des deux registres $R_0$, $R_1$ reçoit la somme du contenu des deux registres, et l'autre des deux registres le double du contenu de ce registre. Si le bit $k_s$ correspondant à l'itération en cours, du nombre scalaire k est à 0, le registre $R_1$ reçoit le résultat de l'addition, et le contenu du registre $R_0$ est doublé, et inversement si le bit $k_s$ est à 1.

Cet algorithme présente l'avantage d'être parfaitement régulier en ce que chaque itération comporte systématiquement deux additions, ou une addition et une opération de doublement. Cet avantage est obtenu sans avoir à ajouter d'opération factice, donc sans avoir à augmenter le temps de calcul.

Il est également possible de réduire le temps de calcul d'un produit par un nombre scalaire par une sélection appropriée d'une représentation de points d'une courbe elliptique. En effet, les opérations de doublement et d'addition en coordonnées affines comportent un calcul d'inversion qui nécessite un temps de calcul correspondant à celui de plusieurs dizaines de multiplications. Il est connu de supprimer ce calcul d'inversion en utilisant une représentation en coordonnées projectives, telles que les coordonnées projectives homogènes ou jacobiennes. La représentation en coordonnées projectives homogènes consiste à changer les coordonnées affines (x, y) en coordonnées de la forme $(X/Z,Y/Z)$, Z étant différent de 0. L'équation de la courbe elliptique de Weierstrass devient alors : $Y^2Z = X^3 + aXZ^2 + bZ^3$. La représentation en coordonnées projectives jacobiennes consiste à changer les coordonnées affines (x, y) en coordonnées de la forme $(X/Z^2,Y/Z^3)$, Z étant différent de 0. L'équation de la courbe elliptique de Weierstrass devient : $Y^2 = X^3 + aXZ^4 + bZ^6$.

Il pourrait donc être souhaité de réduire davantage le temps de calcul d'un procédé d'exécution d'un calcul de multiplication scalaire appliqué à un point d'une courbe elliptique. Il pourrait être également souhaité de protéger un tel procédé contre les attaques à canal caché mentionnées précédemment, tout en évitant de pénaliser le temps de calcul.

Des modes de réalisation concernent un procédé de traitement cryptographique de données, mis en oeuvre dans un dispositif électronique comprenant un processeur, le procédé comprenant des étapes de fourniture d'un point d'une courbe elliptique dans un corps de Galois, et d'un premier nombre entier, et de calcul d'une multiplication scalaire du point par le premier nombre, les coordonnées du point et le premier nombre ayant une taille supérieure à la taille de mots susceptibles d'être traités directement par le processeur. Selon un mode de réalisation, le calcul de multiplication scalaire du point par le premier nombre, comprend des étapes consistant à : mémoriser une série de points multiples résultant chacun du produit scalaire du point par 2 élevé à une puissance appartenant à une série de nombres entiers, initialiser un point résultant appartenant à la courbe elliptique, exécuter plusieurs itérations pour prendre en compte une seule fois chacun des bits du premier nombre, chaque itération comprenant un calcul d'une combinaison de plusieurs bits du premier nombre, et si la combinaison est non nulle, un calcul d'addition entre le point résultant et l'un des points multiples mémorisés correspondant à des rangs des bits de la combinaison de bits du premier nombre, et fournir en sortie du processeur le point résultant en tant que résultat du calcul de multiplication scalaire du point par le premier nombre.

Selon un mode de réalisation, les bits du premier nombre sont pris en compte dans un ordre aléatoire ou pseudo-aléatoire lors du calcul du point résultant.

Selon un mode de réalisation, les calculs d'addition entre le point résultant et les multiples mémorisés sont effectués en coordonnées affines.

Selon un mode de réalisation, les calculs d'addition entre le point résultant et les résultats mémorisés sont effectués en coordonnées projectives.

Selon un mode de réalisation, les multiples scalaires du point sont mémorisés en coordonnées affines, et les résultats obtenus étant transformés en coordonnées projectives par ajout aux coordonnées affines, d'une troisième coordonnée ayant une valeur fixée à un.

Selon un mode de réalisation, le premier nombre et les coordonnées du point sont codés en NAF, le procédé comprenant pour chaque bit égal à -1 ou combinaison de bits inférieure ou égale à -1, du premier nombre, un calcul d'addition entre le point résultant et l'opposé du multiple mémorisé correspondant au rang du bit égal à -1 ou de la combinaison de bits inférieure ou égale à -1, du premier nombre.

Selon un mode de réalisation, le procédé comprend une étage de génération d'une paire de clés privée et publique, comportant des étapes consistant à : choisir aléatoirement un second nombre en tant que clé privée, choisir en tant que point de base un point d'une courbe elliptique, les multiples mémorisés ayant été calculés à partir du point de base, et calculer le point résultant de la multiplication scalaire du point de base par le second nombre en utilisant les points multiples mémorisés, le point résultant ou l'une de ses coordonnées, étant choisi en tant que clé publique correspondant à la clé privée.

Selon un mode de réalisation, le procédé comprend une étage de signature d'un message, comportant des étapes consistant à : choisir aléatoirement un second nombre, choisir en tant que point de base un point d'une courbe elliptique, les multiples mémorisés ayant été calculés à partir du point de base, et calculer le point résultant, issu de la multiplication scalaire du point de base par le second nombre en utilisant les multiples mémorisés, appliquer une fonction de hachage au message à signer, et calculer la signature du message par les équations suivantes :

$$x = i \bmod n$$

$$y = k^{-1}(H(m)+sx) \bmod n,$$

dans lesquelles x et y représentent la signature du message m, i étant une coordonnée du point résultant, k étant le second nombre, H(m) la fonction de hachage appliquée au message m, s un nombre utilisé comme clé privée, et n étant le plus petit entier positif tel que le produit scalaire de n par le point de base est égal au point à l'infini de la courbe elliptique.

Des modes de réalisation concernent également un dispositif électronique comprenant un processeur configuré pour mettre en oeuvre le procédé défini précédemment.

Selon un mode de réalisation, le dispositif est portable et autonome, ou de type carte à puce.

Des exemples de réalisation de l'invention et de mise en oeuvre du procédé de l'invention seront décrits dans ce qui suit, à titre non limitatif en relation avec l'unique figure jointe représentant schématiquement un dispositif électronique mettant en oeuvre un algorithme de multiplication scalaire selon un mode de réalisation.

L'invention concerne un procédé de calcul cryptographique comportant des additions de points identiques ou différents, appartenant à une courbe elliptique dans un corps de Galois. Ce procédé est mis en oeuvre par un dispositif électronique configuré pour exécuter des calculs cryptographiques, incluant des multiplications scalaires d'un point par un nombre entier. Le procédé peut comprendre un calcul de multiplication scalaire utilisé par les algorithmes ECDSA, ECDH, ECIES, etc.

Selon un mode de réalisation, ce procédé se base sur une dérivation de l'algorithme A1', dans lequel les calculs de doublement sont effectués une seule fois, sachant que le point P n'est pas amené à être changé fréquemment. En effet, le point P faisant l'objet de tels calculs est dans certains cas fixé par exemple en tant que point de base faisant partie des paramètres dits de "domaine" d'un système cryptographique à courbe elliptique. Ces paramètres de domaine comprennent notamment les coefficients a et b d'une courbe elliptique dite de Weierstrass de la forme $y^2 = x^3 + ax + b$ dans un corps Fp, p étant un nombre premier strictement supérieur à 3, avec $4a^3 + 27b^2 \neq 0$, ou bien de la forme $y^2 + xy = x^3 + ax^2 + b$ dans un corps binaire $F_{2^m}$. Les calculs de doublement de points d'une courbe elliptique peuvent être effectués en utilisant une addition optimisée tenant compte de l'égalité des opérandes.

L'algorithme A3 figurant en Annexe II est un exemple d'algorithme de multiplication scalaire, de droite à gauche, selon un mode de réalisation. L'algorithme A3 utilise une table ou un ensemble de v registres DP de la taille du point P (c'est-à-dire de la taille des coordonnées de ce point), v étant le nombre de bits du nombre scalaire k. Cet algorithme utilise un autre registre R également de la taille du point P. A noter que la taille du registre peut varier selon le système de coordonnées choisi.

A l'étape 1 de cet algorithme, le registre R est initialisé à la valeur du point neutre "0" (tel que P [+] 0 = 0 [+] P = P) et le registre DP[0] reçoit la valeur du point P. L'étape 2 est un contrôle de boucle sur le nombre v de bits du nombre scalaire k. A l'étape 2.1 dans la boucle, la fonction de doublement est appelée pour charger dans le registre DP[i+1] la valeur du double du point contenu dans le registre DP[i]. L'étape 2.2 dans la boucle, est exécutée si le bit courant $k_i$ de rang i du nombre scalaire k est à 1. Si tel est le cas, la fonction d'addition est appelée pour incrémenter le contenu du registre R de la valeur contenue dans le registre DP[i]. A la suite de v itérations, le registre R contient le résultat [k]·P de l'opération de multiplication scalaire du point P par le nombre entier k. Chaque registre DP[i] de l'ensemble de registres DP mémorise un multiple en $2^i \cdot P$ (pour chaque valeur de i comprise entre 0 et v-1) du point P. De cette manière, si un nouveau calcul de multiplication scalaire doit être effectué avec un nombre scalaire k' différent du nombre k, il n'est pas nécessaire de recalculer les multiples $2^i \cdot P$ du point P.

Ainsi, l'algorithme A4 figurant en Annexe II permet d'obtenir le résultat [k]·P de la multiplication du nombre scalaire k par le point P seulement en exécutant l'étape 2.2 à chaque itération.

Dans une courbe elliptique de Weierstrass (sur un corps de Galois Fp), l'opposé d'un point P de coordonnées (x, y) et le point [-]P de coordonnées (x, -y). La somme de deux points P1(x1,y1) et P2(x2,y2), avec P2 ≠ ±P1) est un point P3(x3,y3) tel que :

$$x3 = m^2 - x1 - x2$$

$$y3 = m(x1 - x3) - y1, \ \text{avec} \ m = (y2 - y1)/(x2 - x1). \ (1)$$

Le double d'un point P(x,y) avec $y \neq 0$ est un point P4(x4, y4) = [2]·P tel que :

$$x4 = m^2 - 2x$$

$$y4 = m(x - x4) - y, \qquad \text{avec} \ m = (3x^2 + a)/2y. \qquad (2)$$

Il peut être observé que le calcul du nombre m dans les opérations d'addition et de doublement requiert un calcul d'inversion. Un tel calcul d'inversion s'avère très complexe et coûteux en temps de calcul. Il est possible de supprimer le calcul d'inversion par une sélection appropriée d'une représentation des points d'une courbe elliptique. A cet effet, il est connu d'utiliser une représentation en coordonnées projectives, telle que la représentation en coordonnées projectives homogènes ou jacobiennes. La représentation en coordonnées projectives homogène consiste à remplacer les coordonnées affines (x, y) par les coordonnées (X/Z,Y/Z) Z étant différent de 0. Inversement, il est possible de revenir en coordonnées affines d'un point en remplaçant les coordonnées projectives par les coordonnées (X=x·Z,Y=y·Z,Z), Z pouvant être choisi égal à 1 ou toute autre valeur non nulle du corps Fp. Le passage de coordonnées affines en coordonnées projectives peut être effectué simplement en choisissant Z égal à 1.
La somme de deux points P1(X1,Y1,Z1) et P2(X2,Y2,Z2) en coordonnées projectives homogènes, avec P2 $\neq$ [±]P1, Z1 $\neq$ 0 et Z2 $\neq$ 0, est un point P3(X3,Y3,Z3) tel que :

$$\left| \begin{array}{l} X3 = B.C \\ Y3 = A \cdot (B^2 \cdot X1 \cdot Z2 - C) - B^3 \cdot Y1 \cdot Z2 \\ Z3 = B^3 \cdot Z1 \cdot Z2 \end{array} \right. \quad \text{avec :} \quad \left| \begin{array}{l} A = Y2 \cdot Z1 - Y1 \cdot Z2 \\ B = X2 \cdot Z1 - X1 \cdot Z2 \\ C = A^2 \cdot Z1 \cdot Z2 - B^3 2 \cdot B^2 \cdot X1 \cdot Z2 \ (3) \end{array} \right.$$

Le doublement d'un point P(X,Y,Z) est un point P4(X4,Y4,Z4) tel que :

$$\left| \begin{array}{l} X4 = B \cdot E \\ Y4 = A \cdot (D - E) - 2 \cdot C^2 \\ Z4 = B^3 \end{array} \right. \quad \text{avec :} \quad \left| \begin{array}{l} A = 3 \cdot X^2 + a \cdot Z^2 \\ B = 2 \cdot Y \cdot Z \\ C = B \cdot Y \\ D = 2 \cdot C \cdot X \\ E = A^2 - 2 \cdot D \qquad (4) \end{array} \right.$$

Les opérations ci-dessus sont effectuées dans le corps de Galois Fp, modulo p. Il peut être observé que les équations ci-dessus ne comportent pas d'opérations d'inversion. Ainsi, une opération d'addition en coordonnées projectives homogènes requiert douze multiplications, deux élévations au carré et sept additions, ces opérations étant modulaires et portant exclusivement sur des grands nombres. L'opération de doublement en coordonnées projectives homogènes requiert sept multiplications, cinq élévations au carré et onze additions. Par ailleurs, si a est choisi égal à -3 (comme dans toutes les courbes du standard FIPS 186-3), le nombre A peut être factorisé dans la formule d'addition de la manière suivante :

$$A = 3 \cdot (X1 + Z1^2) \cdot (X1 - Z1^2) \qquad (5)$$

ce qui permet d'économiser deux élévations au carré de grands nombres entiers.
Selon un mode de réalisation, les valeurs mémorisées dans les registres DP sont calculées et stockées en coordonnées affines et transformées en coordonnées projectives jacobiennes ou homogènes en choisissant Z égal à

lors de la multiplication scalaire. En effet, si les valeurs mémorisées dans les registres DP sont utilisées pour plusieurs calculs de produit par un nombre scalaire, un compromis acceptable peut consister à calculer ces valeurs par des calculs en coordonnées affines, plus coûteux en temps de calcul, ou par des calculs en coordonnées projectives suivis de conversions des points en coordonnées affines. Il en résulte que l'addition d'un point P1(X1,Y1,Z1) avec un multiple DP[i] de coordonnées (DX,DY,1), effectuée à l'étape 2.2 peut être simplifiée de la manière suivante :

$$\begin{vmatrix} X3 = B \cdot C \\ Y3 = A \cdot (B^2 \cdot X1 - C) - B^3 \cdot Y1 \\ Z3 = B^3 \cdot Z1 \end{vmatrix} \quad \text{avec :} \quad \begin{vmatrix} A = DY \cdot Z1 - Y1 \\ B = DX \cdot Z1 - X1 \\ C = A^2 \cdot Z1 - B^3 - 2 \cdot B^2 \cdot X1 \end{vmatrix} \quad (6)$$

Ce mode de réalisation permet donc d'obtenir une réduction de trois multiplications de grands nombres pour chaque addition de points effectuée à l'étape 2.2. Une telle addition de points où l'un des points est exprimé en coordonnées projectives, l'autre en coordonnées affines (ou projectives avec Z=1) et le résultat est obtenu en coordonnées projectives, est appelée addition "mixte".

L'algorithme A5 présenté en Annexe II est dérivé de l'algorithme A4 en appliquant une fenêtre glissante de deux bits, c'est-à-dire en traitant deux bits du nombre scalaire k à chaque itération. Le nombre d'itérations à effectuer est donc divisé par deux, en utilisant un ensemble R de trois registres au lieu d'un seul registre. Par ailleurs, le nombre de registres de l'ensemble des registres DP est divisé par deux par comparaison avec l'algorithme A4, et chaque registre DP[i] reçoit le multiple $[2^{2i}] \cdot P$. Chaque itération d'indice i comporte deux étapes 2.1 et 2.2. L'étape 2.1 consiste à calculer un nombre entier u en combinant deux bits consécutifs $k_{2i}$ et $k_{2i+1}$ de rangs 2i et 2i+1 du nombre scalaire k. L'étape 2.2 qui est exécutée si le nombre u est non nul, consiste à ajouter au point dans le registre R[u] le point DP[i], soit $[2^{2i}] \cdot P$. Lorsque toutes les itérations ont été effectuées, le résultat de la multiplication scalaire est obtenu par la combinaison des valeurs des registres R[1] [+] 2·R[2] [+] 3·R[3].

L'algorithme A6 présenté en Annexe II est une généralisation de l'algorithme A5 à une fenêtre glissante de m valeurs, c'est-à-dire en regroupant le traitement de m bits $k_i$ du nombre scalaire k à chaque itération. L'application d'une telle fenêtre glissante permet ainsi de diminuer le nombre d'itérations. Cependant cette diminution est réalisée au détriment du nombre d'opérations d'addition et de doublement effectuées à l'étape 3 qui augmente d'une manière exponentielle (en $2^m$). Il existe donc une valeur optimum de la taille de la fenêtre glissante, en fonction de la taille v du nombre scalaire.

Il peut être observé que l'opération réalisée à l'étape 2.2 de l'algorithme A4, peut être effectuée dans n'importe quel ordre. Ainsi, le rang i du bit $k_i$ traité à chaque itération peut être choisi de manière aléatoire ou pseudo-aléatoire, dès lors que chaque bit $k_i$ du nombre scalaire k est traité une et une seule fois.

L'algorithme A4' présenté en Annexe II est dérivé de l'algorithme A4 en lui ajoutant une étape supplémentaire 2' d'application d'une permutation aléatoire σ aux bits $k_i$ du nombre scalaire k. L'étape 2.2 est également modifiée pour utiliser le multiple DP[σ(i)] correspondant au bit $k_{\sigma(i)}$ traité par l'itération courante. Un algorithme de permutation pseudo-aléatoire est décrit par exemple dans le document "A New DPA Countermeasure Based on Permutation Tables", Jean-Sébastien Coron, SCN 2008, p. 278-292. Les attaques SPA et DPA (Differential Power Analysis) peuvent ainsi être neutralisées sans avoir à ajouter d'opérations factices et donc sans pénaliser les performances de calcul. En effet, de telles attaques visent à déterminer à quelles itérations une opération d'addition est effectuée, et à en déduire la valeur du nombre scalaire k, sachant qu'une opération d'addition est effectuée pour chaque bit $k_i$ égal à 1 du nombre k. Si les bits $k_i$ sont traités dans un ordre aléatoire comme dans l'algorithme A4', une telle attaque permet simplement de déterminer le nombre de bits $k_i$ à 1, mais pas leurs rangs respectifs dans le nombre k.

Dans les algorithmes A5 et A6, les groupes de bits du nombre scalaire k traités à chaque itération, peuvent être également traités dans un ordre quelconque, par exemple choisi aléatoirement. Il en résulte que les groupes de deux ou m bits du nombre k traités à chaque itération ne sont pas nécessairement consécutifs. Les groupes de bits $k_i$ traités à chaque itération des algorithmes A5 et A6 peuvent donc être choisis de manière aléatoire ou pseudo-aléatoire, dès lors que tous les bits du nombre scalaire k sont pris en compte dans le calcul du produit scalaire. Ainsi, les algorithmes A5', A6' présentés en Annexe II sont dérivés des algorithmes A5 et A6 en leur ajoutant à chacun une étape supplémentaire 2' d'application d'une permutation aléatoire aux bits du nombre scalaire k. Les étapes 2.1 et 2.2 sont également modifiées pour tenir compte du rang de chacun des bits $k_i$ traités par l'itération courante dans le calcul du nombre u et lors de la lecture des registres DP.

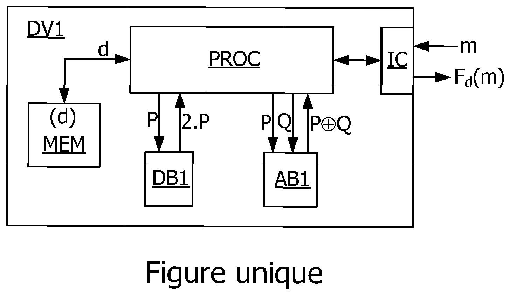

La figure 1 représente sous forme de schéma bloc un dispositif électronique DV1 configuré pour exécuter un calcul cryptographique incluant un ou plusieurs des algorithmes A3, A4, A4', A5, A5', A6, A6' appliqués à des nombres de grande taille. Le dispositif DV1 peut être un circuit intégré sur microplaquette de semi-conducteur agencé sur un support portatif comme une carte en matière plastique, l'ensemble formant une carte à puce. Le dispositif DV1 peut également être n'importe quel appareil équipé d'un processeur multi-tâche, tel qu'un téléphone mobile intelligent ("smartphone"), un lecteur multimédia, une tablette tactile, ou un ordinateur personnel. Le dispositif DV1 peut également être un composant d'un tel appareil, par exemple relié à un processeur principal de l'appareil.

Le dispositif DV1 comprend un processeur PROC, un bloc de calcul AB1 configuré pour exécuter une addition de points P et Q appartenant à une courbe elliptique, un bloc de calcul DB1 configuré pour exécuter un doublement d'un point P appartenant à une courbe elliptique, une mémoire MEM et un circuit d'interface de communication IC. Le circuit d'interface IC peut être du type à contact ou sans contact, par exemple un circuit d'interface RF ou UHF fonctionnant par couplage inductif ou par couplage électrique. Les blocs de calcul AB1, DB1 peuvent comprendre chacun un coprocesseur équipé d'une unité centrale programmable, un coprocesseur entièrement hardware de type machine d'état. Les blocs de calculs AB1, DB1 peuvent simplement correspondre à une fonction appelée par un programme principal exécuté notamment par le processeur PROC. Les deux blocs de calcul AB1, DB1 peuvent également être intégrés dans un même composant (coprocesseur ou machine d'état).

De façon en soi classique, une variable est dite "de grande taille" lorsque sa taille (en nombre de bits) est supérieure à celle des registres de calcul du processeur PROC. Ce dernier effectue lui-même, sans faire appel aux blocs de calcul AB1, DB1, des opérations de nombres de taille inférieure ou égale à celle de ses registres de calcul, et fait appel aux blocs de calcul AB1, DB1 pour effectuer des opérations d'addition et de doublement portant sur des points de courbe elliptique présentant des coordonnées de grande taille. Par exemple, si la taille des registres de calcul du processeur PROC est de 32 bits, une variable de grande taille est une variable de plus de 32 bits. En cryptographie basée sur les courbes elliptiques, les variables manipulées (coordonnées des points de courbes elliptiques, paramètres p - module, b, n - nombre de points appartenant à la courbe elliptique, Gx, Gy - coordonnées du point de base G) peuvent atteindre plusieurs centaines de bits (typiquement 160, 192, 224, 256, 320, 384, 521 bits).

La mémoire MEM est couplée au processeur PROC et permet au dispositif DV1 de mémoriser une clé secrète k. Le processeur PROC reçoit, par l'intermédiaire du circuit d'interface IC, un message m à chiffrer, à déchiffrer, ou à signer, ou bien une signature à vérifier, et renvoie un message chiffré ou déchiffré, ou une signature, du type $F_k(m)$, $F_k$ étant une fonction de cryptographie basée sur la clé k comprenant un calcul de multiplication scalaire exécuté au moyen de l'un des algorithmes présentés en Annexe II. Pendant le calcul de multiplication scalaire, le processeur PROC fait appel aux blocs de calcul AB1, DB1, en fournissant des points P, Q au bloc de calcul AB1 qui retourne la somme P [+] Q, et en fournissant un point P au bloc de calcul DB1 qui retourne le double [2]·P. Une partie de la mémoire MEM peut également être utilisée comme mémoire tampon pour mémoriser le contenu des registres R et DP mentionnés dans les algorithmes présentés en Annexe II.

Le dispositif DV1 peut également comprendre des blocs de calcul configurés pour exécuter une multiplication modulaire de nombres de grande taille et une élévation au carré modulaire d'un nombre de grande taille, ces blocs de calcul étant utilisés par les blocs de calcul AB1, DB1 pour mettre en oeuvre les équations (1) à (6).

Les temps d'exécution par bit du nombre scalaire k et le nombre de registres de grande taille utilisés (c'est-à-dire de points à mémoriser) pour chacun des algorithmes précédemment présentés sont rassemblés dans le tableau 1 suivant :

Tableau 1

| Algorithme | Temps d'exécution par bit du scalaire k en coordonnées projectives homogènes | Temps d'exécution par bit du scalaire k en coordonnées projectives homogènes utilisant des additions mixtes | Nombre de registres |
|---|---|---|---|
| ADD | ≈ 13,6·M | ≈ 10,6·M | |
| DOUBLE | ≈ 11·M | ≈ 11·M | |
| A1 | ≈ 17,8·M | ≈ 16,3·M | 1 |
| A1' | ≈ 17,8·M | | 2 |
| A2 | ≈ 24,6·M | ≈ 21,6·M | 2 |
| A3 | ≈ 17,8·M | | v+1 |
| A4 | ≈ 6,8·M | ≈ 5,3·M | v+1 |
| A5 | ≈ (5,1 + 51,8/v)·M | ≈ (3,98 + 51,8/v)·M | v/2+3 |
| A6 / m=3 | ≈ (3,97 + 172/v)·M | ≈ (3,09 + 172/v)·M | v/3+7 |
| A6 / m=4 | ≈ (3,19 + 455/v)·M | ≈ (2,48 + 455/v)·M | v/4+15 |

(suite)

| Algorithme | Temps d'exécution par bit du scalaire k en coordonnées projectives homogènes | Temps d'exécution par bit du scalaire k en coordonnées projectives homogènes utilisant des additions mixtes | Nombre de registres |
|---|---|---|---|
| A6 / m=8 | $\approx (1{,}69 + 14000/v)\cdot M$ | $\approx (1{,}32 + 14000/v)\cdot M$ | v/8+255 |

Dans le tableau 1, v représente le nombre de bits du nombre scalaire k, et M représente le temps de calcul d'une multiplication de nombres de grande taille, M variant également en fonction du nombre v. Les valeurs numériques relatives au temps d'exécution figurant dans le tableau 1 ont été obtenues en considérant que le coût en temps de calcul d'une élévation au carré d'un grand nombre est égal à 0,8 fois celui d'une multiplication de grands nombres, et en négligeant le temps d'exécution des additions et soustractions de nombres de grande taille. Le tableau 1 mentionne également le temps d'exécution des opérations d'addition et de doublement d'un point. Dans les algorithmes A5, A6, le terme additionnel figurant dans les colonnes relatives au temps d'exécution, représente le temps de calcul pris pour exécuter l'étape 3 rapporté au nombre de bits v. Le nombre d'opérations d'addition et de doublement effectuées à l'étape 3 augmente rapidement avec la valeur de m.

Il ressort du tableau 1 que les algorithmes A4 à A6 atteignent un temps de calcul par bit du nombre scalaire, sensiblement égal ou inférieur à la moitié du temps de calcul d'une addition de points d'une courbe elliptique.

Selon un mode de réalisation, les algorithmes présentés en Annexe II sont adaptés pour traiter des nombres scalaires codés non pas en binaire mais sous une autre forme, par exemple en codage NAF (Non-Adjacent Form). En codage NAF, chaque bit d'un nombre peut présenter trois états (-1,0,1) et chaque bit différent de 0 du nombre est précédé et suivi d'un bit à 0, les premiers et derniers bits du nombre pouvant avoir n'importe quelle valeur. Il en résulte que le nombre moyen de bits à 0 d'un nombre (poids de Hamming) passe de la moitié en binaire à un tiers en codage NAF, tandis que le nombre de bits d'un nombre en codage NAF est identique ou augmenté de 1 par rapport à celui de ce même nombre codé en binaire. Ainsi, les algorithmes A4", A5", A6", présentés en Annexe III sont des adaptations des algorithmes A4, A5, A6 à une représentation des nombres en codage NAF. En comparaison avec les algorithmes A4, A5, A6, les algorithmes A4", A5", A6" comprennent une étape supplémentaire 2.3 pour traiter le cas où le bit $k_i$ est égal à -1. Dans ce cas, le multiple DP[i] ou DP[u] est retranché du point R. De manière classique, l'opération de soustraction de points consiste en une addition, le second opérande étant changé de signe. Dans le groupe de points d'une courbe elliptique sur un corps de Galois de type Fp, p étant un nombre premier supérieur à 3, le changement de signe d'un point P(x,y) en coordonnées affines consiste à changer le signe de sa seconde coordonnée y. Dans le groupe de points d'une courbe elliptique sur un corps de Galois de type $F_2{}^m$, le changement de signe d'un point P(x,y) en coordonnées affines consiste à remplacer la seconde coordonnée par la somme x+y des coordonnées du point.

Bien entendu, les algorithmes A4', A5', A6' peuvent être adaptés d'une manière analogue pour traiter des nombres en codage NAF, pour contrer des attaques de type SPA et/ou DPA.

Compte tenu du rapport moyen de bits différents de 0 égal à 1/3, dans un nombre en codage NAF, les temps d'exécution par bit du nombre scalaire k pour chacun des algorithmes A4", A5", A6" sont rassemblés dans le tableau 2 suivant :

Tableau 2

| Algorithme | Temps d'exécution par bit du scalaire k en coordonnées projectives homogènes | Temps d'exécution par bit du scalaire k en coordonnées projectives homogènes utilisant des additions mixtes |
|---|---|---|
| A4" | $\approx 4{,}53\cdot M$ | $\approx 3{,}53\cdot M$ |
| A5" | $\approx 3{,}478 + 51{,}8/v)\cdot M$ | $\approx (2{,}94 + 51{,}8/v)\cdot M$ |
| A6" / m=3 | $\approx 3{,}19 + 172/v)\cdot M$ | $\approx (2{,}49 + 172/v)\cdot M$ |
| A6" / m=4 | $\approx (2{,}73 + 455/v)\cdot M$ | $\approx (2{,}13 + 455/v)\cdot M$ |
| A6" / m=8 | $\approx (1{,}63 + 14000/v)\cdot M$ | $\approx (1{,}27 + 14000/v)\cdot M$ |

Le nombre de registres de grande taille utilisés par les algorithmes A4", A5", A6" reste inchangé par rapport à ceux utilisés par les algorithmes A4, A5, A6.

Les algorithmes présentés en Annexes II et III peuvent être mis en oeuvre dans un algorithme de signature numérique à clé publique de type ECDSA. L'algorithme ECDSA consiste à choisir une courbe elliptique E(a,b) sur un corps de Galois $F_q$, et un point de base G(Gx,Gy) de la courbe elliptique choisie E(a,b). Le nombre n est le plus petit entier positif tel que [n]·G = Ø (point à l'infini). Il s'agit ensuite de générer une paire de clés publique et privée. La clé privée s peut être choisie aléatoirement entre 1 et n-1. La clé publique Q est choisie égale à [s]·G. Le point G étant fixe, les doubles du point G peuvent être calculés une seule fois et mémorisés dans une table. La clé publique Q peut être obtenue par l'algorithme A3 ou par les autres algorithmes présentés dans les Annexes II et III, si la table DP contenant les multiples en $2^i$ du point G a été remplie.

Pour signer un message m, on choisit de manière aléatoire un nombre k entre 1 et n-1. On calcule les coordonnées du point P(i,j) = [k]·G. Si x = i mod n est égal à 0, il est nécessaire de choisir un autre nombre k. On calcule ensuite le nombre y = $k^{-1}$(H(m)+sx) mod n, où H(m) est le résultat d'une fonction de hachage telle que SHA-1, appliquée au message m. Si le nombre y obtenu est nul, il est nécessaire de recommencer le calcul en choisissant une autre valeur pour le nombre k. La signature est constituée par la paire (x, y).

Pour vérifier la signature (x,y), il faut tout d'abord vérifier que le point Q constituant la clé publique est différent de 0, qu'il appartient à la courbe elliptique E(a,b), que [n]·Q = Ø et que *x* et *y* sont bien compris entre 1 et n-1. Ensuite, il convient de calculer les coordonnées du point P(i,j) de la manière suivante :

$$P(i,j) = [H(m)\cdot y^{-1} \bmod n]\cdot G + [x\cdot y^{-1} \bmod n]\cdot Q$$

et vérifier que x = i mod n. Les multiples en $2^i$ du point Q peuvent également être mémorisés dans une table si la paire de clés (s,Q) peut être utilisée plusieurs fois pour signer et vérifier la signature d'un message.

Les algorithmes présentés en Annexes II et III peuvent également être mis en oeuvre dans l'algorithme de chiffrement/déchiffrement ECIES. Une paire de clés privée et publique (s, Q) peut être générée comme dans l'algorithme ECDSA. Pour chiffrer un message m, on choisit aléatoirement un nombre r entre 1 et n-1, et on calcule les points R = [r]·G et P(x,y) = [r]·Q, Q étant la clé publique du destinataire du message chiffré. La condition P ≠ Ø doit être vérifiée. Ici encore, les multiples en $2^i$ des points G et Q peuvent être calculés une fois pour toutes et mémorisés dans des tables. On utilise ensuite une fonction de dérivation de clé KDF pour générer des clés symétriques Ke, Km, telles que (Ke, Km) = KDF(x,S1), S1 étant une donnée partagée avec le destinataire du message chiffré. Le message m est ensuite chiffré par un algorithme de chiffrement symétrique E utilisant la clé Ke. On calcule ensuite une donnée d en appliquant une fonction de hachage à la clé Km et à une autre donnée S2 partagée avec le destinataire du message. Le résultat c du chiffrement du message est transmis au destinataire du message chiffré avec la donnée d et la clé publique R.

Pour déchiffrer le message chiffré (c,d) le destinataire du message calcule le point P(x,y) = [s]·R (=[r]·Q). Le point P obtenu doit être différent de 0. On utilise ensuite la même fonction de dérivation de clé KDM et la donnée partagée S1, pour générer les clés symétriques Ke, Km. On calcule ensuite le nombre d en utilisant la même formule appliquée à la clé Km et à la donnée partagée S2. Si le nombre d obtenu est identique au nombre d reçu, le message peut être déchiffré en appliquant à la donnée chiffrée c reçue, la fonction de déchiffrement symétrique correspondant à la fonction de chiffrement utilisée, à l'aide de la clé Ke.

Il apparaîtra clairement à l'homme de l'art que la présente invention est susceptible de diverses variantes de réalisation et diverses applications. En particulier, l'invention n'est pas limitée aux applications présentées, mais s'applique à toute autre application de cryptographie à courbe elliptique dans laquelle les doubles d'un point sont réutilisés plusieurs fois.

L'invention n'est pas non plus limitée aux coordonnées projectives présentées, mais s'applique à n'importe quel autre type de coordonnées, l'adaptation des algorithmes présentés à ces autres types de coordonnées étant à la portée de l'homme du métier.

L'invention n'est pas non plus limitée à la mémorisation de tous les multiples en $2^i$ ou $2^{m\cdot i}$ du point P faisant l'objet d'une multiplication scalaire, jusqu'à v ou $\left\lceil \dfrac{v}{m} \right\rceil$, c'est-à-dire le plus petit entier supérieur à v/m. En effet, il peut être souhaité de limiter l'espace mémoire occupé par les registres DP. A cet effet, les multiples manquants peuvent être calculés lors du calcul itératif du résultat de la multiplication, seulement si nécessaire. Ainsi, dans les algorithmes A4, A4' et A4", seuls les multiples en $2^{2i}$ ou $2^{2i+1}$ peuvent être mémorisés, les multiples manquants pouvant être calculés en fonction des besoins du calcul de multiplication scalaire, simplement en effectuant une opération de doublement pour multiplier le multiple DP[i] immédiatement inférieur par 2. Cette disposition peut être aisément extrapolée aux algorithmes A5 et A6 et leurs algorithmes dérivés. Il peut également être envisagé de ne mémoriser que les premiers multiples en $2^i$ ou $2^{m\cdot 1}$ du point P, les autres multiples étant calculés à chaque itération comme dans l'algorithme A3.

**ANNEXE I** (Faisant partie intégrante de la description)

**Algorithme A1 - Multiplication par un scalaire "Double & Add", de gauche à droite"**

**Entrée :** *un point P appartenant à la courbe elliptique E sur le corps de Galois $F_q$*
*un scalaire k entier de v bits tel que k = $(k_{v-1} k_{v-2}... k_0)_2$*
**Requiert :** *un registre R de la taille du point P*
**Sortie :** *[k]·P*
**Étape 1 :** R = Ø
**Étape 2 :** pour s allant de v-1 à 0 faire :

    **Étape 2.1 :** R = [2]·R (DOUBLE)
    **Étape 2.2 :** si $k_s$ = 1 alors R = R [+] P (ADD)

    **Étape 3 :** Retourner R

**Algorithme A1' - Multiplication par un scalaire "Double & Add", de droite à gauche"**

**Entrée :** *un point P appartenant à la courbe elliptique E sur le corps de Galois $F_q$*
*un scalaire k entier de v bits tel que k = $(k_{v-1} k_{v-2}... k_0)_2$*
**Requiert :** *deux registres $R_0$, $R_1$ de la taille du point P*
**Sortie :** *[k]·P*
**Étape 1 :** $R_0$ = Ø ; $R_1$ = P
**Étape 2 :** pour s allant de 0 à v-1 faire :

    **Étape 2.1 :** si $k_s$ = 1 alors $R_0$ = $R_0$ [+] $R_1$ (ADD)
    **Étape 2.2 :** $R_1$ = [2]·$R_1$ (DOUBLE)

    **Étape 3 :** Retourner $R_0$

"P[+]Q" représente l'addition de deux points P et Q d'une courbe elliptique
"Ø" représente l'élément neutre du corps $F_q$ (tel que P[+]Ø = Ø[+]P = P)

**Algorithme A2 - "Montgomery Ladder" (de gauche à droite)**

**Entrée :** *un point P appartenant à la courbe elliptique E sur le corps de Galois $F_q$*
*un scalaire k entier de v bits tel que k = $(k_{v-1} k_{v-2}... k_0)_2$*

**Requiert :** *deux registres $R_0$, $R_1$ de la taille du point P*

**Sortie :** *[k]·P*

**Étape 1 :** $R_0$ = Ø ; $R_1$ = P

**Étape 2 :** pour s allant de v-1 à 0 faire :

    **Étape 2.1 :** b = $k_s$
    **Étape 2.2 :** $R_{1-b}$ = $R_{1-b}$ [+] $R_b$ (ADD)
    **Étape 2.3 :** $R_b$ = [2]·$R_b$ (DOUBLE)

    **Étape 3 :** Retourner $R_0$

**ANNEXE II** (Faisant partie intégrante de la description)

**Algorithme A3 - Multiplication par un scalaire "Double & Add"**

**Entrée :** *un point P appartenant à la courbe elliptique E sur le corps de Galois F$_q$*
*un scalaire k entier de v bits tel que k = (k$_{v-1}$ k$_{v-2}$... k$_0$)$_2$*
**Requiert :** *un registre R de la taille du point P*
*Un ensemble de v+1 registres DP de la taille du point P*
**Sortie :** *[k]·P*
**Étape 1 :** R = Ø ; DP[0] = P
**Étape 2 :** pour i allant de 0 à v-1 faire :

    **Étape 2.1 :** DP[i+1] = [2]·DP[i] (DOUBLE)
    **Étape 2.2 :** si k$_i$ = 1 alors R = R [+] DP[i] (ADD)

    **Étape 3 :** Retourner R

**Algorithme A4 - Multiplication par un scalaire "Doubles Stored & Add Only"**

**Entrée :** *un point P appartenant à la courbe elliptique E sur le corps de Galois F$_q$*
*un scalaire k entier de v bits tel que k = (k$_{v-1}$ k$_{v-2}$... k$_0$)$_2$*
**Requiert :** *un registre R de la taille du point P*
*un ensemble de v registres DP de la taille du point P tels que DP[i] = [2$^i$]·P, avec 0 ≤ i < v*
**Sortie :** *[k]·P*
**Étape 1 :** R = Ø
**Étape 2 :** pour i allant de 0 à v-1 faire :

    **Étape 2.2 :** si k$_i$ = 1 alors R = R [+] DP[i] (ADD)

    **Étape 3 :** Retourner R

**Algorithme A5 - Multiplication par un scalaire "Doubles Stored & Add Only"**

**Entrée :** *un point P appartenant à la courbe elliptique E sur le corps de Galois F$_q$*
*un scalaire k entier de v bits tel que k = (k$_{v-1}$ k$_{v-2}$... k$_0$)$_2$*
**Requiert :** un ensemble R de *trois registres de la taille du point P*

*un ensemble de $\left\lceil \dfrac{v}{2} \right\rceil$ registres DP de la taille du point P tels que DP[i]=[2$^{2i}$]·p, avec $0 \leq i < \left\lceil \dfrac{v}{2} \right\rceil$*

**Sortie :** *[k]·P*
**Étape 1 :** R[1] = Ø ; R[2] = Ø ; R[3] = Ø

**Étape 2 :** pour i allant de 0 à $\left\lceil \dfrac{v}{2} \right\rceil - 1$, faire :

    **Étape 2.1 :** u = k$_{2i}$ + 2k$_{2i+1}$
    **Étape 2.2 :** si u ≥ 1 alors R[u] = R[u] [+] DP[i] (ADD)

**Etape 3 :** R[1] = R[1] [+] R[3] [+] [2]·(R[2] [+] R[3]) (ADD)
**Étape 4 :** Retourner R[1]

⌈x⌉ représentant le plus petit nombre entier supérieur ou égal à x

## Algorithme A6 - Multiplication par un scalaire "Doubles stored & Add Only"

**Entrée :** *un point P appartenant à la courbe elliptique E sur le corps de Galois $F_q$*
*un scalaire k entier de v bits tel que k = ($k_{v-1}$ $k_{v-2}$... $k_0$)$_2$*
**Requiert :** un ensemble R de $2^m$-1 *registre. de la taille du point P (m>2)*

*un ensemble de* $\left\lceil \dfrac{v}{m} \right\rceil$ *registres DP de la taille du point P tels que DP[7] = [$2^{m \cdot i}$]·P, pour* $0 \le i < \left\lceil \dfrac{v}{m} \right\rceil$

**Sortie :** *[k]·P*
**Étape 1 :** pour j allant de 1 à $2^m$-1, faire R[j] = Ø

**Étape 2 :** pour i allant de 0 à $\left\lceil \dfrac{v}{m} \right\rceil - 1$, faire :

$\qquad$ **Étape 2.1 :** $u = \displaystyle\sum_{j=0}^{m-1} 2^j \cdot k_{m \cdot i + j}$ (avec $k_i = 0$ si i > v-1)

$\qquad$ **Étape 2.2 :** si u ≥ 1 alors R[u] = R[u] [+] DP[i] (ADD)

**Etape 3 :** $R[1] = \left\lceil \displaystyle\sum_{j=1}^{2^m-1} [j] \cdot R[j] \right\rceil$ (ADD)

**Étape 4 :** Retourner R[1]

[Σ] représente l'opérateur d'addition de points dans le groupe de points de la courbe elliptique, à coordonnées dans le corps $F_q$.

## Algorithme A4' - Multiplication Sécurisée par un scalaire "Doubles Stored & Add Only"

**Entrée :** *un point P appartenant à la courbe elliptique E sur le corps de Galois $F_q$*
*un scalaire k entier de v bits tel que k = ($k_{v-1}$ $k_{v-2}$... $k_0$)$_2$*
**Requiert :** *un registre R de la taille du point P*
*un ensemble de v registres DP de la taille du point P tels que DP[i] = [$2^i$].P, avec $0 \le i < v$*
**Sortie :** *[k]·P*
**Étape 1 :** R = Ø
**Étape 2' :** Générer une permutation aléatoire σ dans {0,...,v-1}
**Étape 2 :** pour i allant de 0 à v-1 faire :

$\qquad$ **Étape 2.2 :** si $k_{\sigma(i)}$ = 1 alors R = R [+] DP[σ(i)] (ADD)

**Étape 3 :** Retourner R

## Algorithme A5' - Multiplication sécurisée par un scalaire "Doubles Stored & Add Only"

**Entrée :** *un point P appartenant à la courbe elliptique E sur le corps de Galois $F_q$*
*un scalaire k entier de v bits tel que k = ($k_{v-1}$ $k_{v-2}$... $k_0$)$_2$*
**Requiert:** un ensemble R de *trois registres de la taille du point P*

un ensemble de $\left|\dfrac{v}{2}\right|$ registres DP de la taille du point P tels que DP[i]=[$2^{2i}$]·P, avec $0 \le i < \left|\dfrac{v}{2}\right|$

**Sortie :** *[k]·P*
**Étape 1 :** R[1] = Ø ; R[2] = Ø ; R[3] = Ø

**Étape 2' :** Générer une permutation aléatoire σ à $\left|\dfrac{v}{2}\right|$ éléments dans $\{0,\ldots, \left|\dfrac{v}{2}\right| -1\}$

**Étape 2 :** pour i allant de 0 à $\left|\dfrac{v}{2}\right| -1,$ faire :

    **Étape 2.1 :** u = $k_{2\sigma(i)}$ + 2$k_{2\sigma(i)+1}$
    **Étape 2.2 :** si ≥ = 1 alors R[u] = R[u] [+] DP[σ(i)] (ADD)

**Étape 3 :** R[1] = R[1] [+] R[3] [+] [2]·(R[2] [+] R[3]) (ADD)
**Étape 4 :** Retourner R[1]

**Algorithme A6' - Multiplication par un scalaire "Doubles stored & Add Only"**

**Entrée :** *un point P appartenant à la courbe elliptique E sur le corps de Galois $F_q$*
*un scalaire k entier de v bits tel que k = ($k_{v-1}$ $k_{v-2}$... $k_0$)$_2$*

**Requiert :** un ensemble R de $2^m$-1 *registres de la taille du point P (m>2)*

un ensemble de $\left|\dfrac{v}{m}\right|$ registres DP de la taille du point P tels que DP[i]=[$2^{m \cdot i}$]·P, avec $0 \le i < \left|\dfrac{v}{m}\right|$

**Sortie :** *[k]·P*

**Étape 1 :** pour j allant de 1 à $2^m$-1, faire R[j] = Ø

**Étape 2' :** Générer une permutation aléatoire σ à $\left|\dfrac{v}{m}\right|$ éléments dans $\{0,\ldots, \left|\dfrac{v}{m}\right| -1\}$

**Étape 2 :** pour i allant de 0 à $\left|\dfrac{v}{m}\right| -1,$ -1, faire :

    **Étape 2.1 :** $u = \displaystyle\sum_{j=0}^{m-1} 2^j k_{m\sigma(i)+j}$ (avec $k_i$ = 0 si i > v-1)
    **Étape 2.2 :** si u ≥ 1 alors R[u] = R[u] [+] DP[σ(i)] (ADD)

**Etape 3 :** $R[1] = \left[\displaystyle\sum_{j=1}^{2^m-1} [j]\cdot R[j]\right]$ (ADD)

**Étape 4 :** Retourner R[1]

**ANNEXE III** (Faisant partie intégrante de la description)

**Algorithme A4" - Multiplication par un scalaire "Doubles Stored & Add Only"**

**Entrée :** *un point P appartenant à la courbe elliptique E sur le corps de Galois $F_q$*
*un scalaire k entier de v bits tel que k = $(k_{v-1} k_{v-2}... k_0)_2$, codé en NAF*
**Requiert :** *un registre R de la taille du point P*
*un ensemble de v registres DP de la taille du point P tels que DP[i] = $[2^i]\cdot P$, avec $0 \leq i < v$*
**Sortie :** *[k]·P*
**Étape 1 :** R = Ø
**Étape 2 :** pour i allant de 0 à v-1 faire :

    **Étape 2.2 :** si $k_i$ = 1 alors R = R [+] DP[i] (ADD)
    **Étape 2.3 :** si $k_i$ = -1 alors R = R [-] DP[i] (ADD)

**Étape 3 :** Retourner R

**Algorithme A5" - Multiplication par un scalaire "Doubles Stored & Add Only"**

**Entrée :** *un point P appartenant à la courbe elliptique E sur le corps de Galois $F_q$*
*un scalaire k entier de v bits tel que k = $(k_{v-1} k_{v-2}... k_0)_2$, codé en NAF*
**Requiert :** un ensemble R de *trois registres de la taille du point P*

*un ensemble de $\left| \dfrac{v}{2} \right|$ registres DP de la taille du point P tels que DP[i]=$[2^{2i}]\cdot P$, avec* $0 \leq i < \left| \dfrac{v}{2} \right|$

**Sortie :** *[k]·P*
**Étape 1 :** R[1] = Ø ; R[2] = Ø ; R[3] = Ø

**Étape 2 :** pour i allant de 0 à $\left| \dfrac{v}{2} \right| - 1$, faire :

    **Étape 2.1 :** u = $k_{2i}$ + $2k_{2i+1}$
    **Étape 2.2 :** si u $\geq$ 1 alors R[u] = R[u] [+] DP[i] (ADD)
    **Étape 2.3 :** si u $\leq$ -1 alors R[u] = R[-u] [-] DP[i] (ADD)

**Etape 3 :** R[1] = R[1] [+] R[3] [+] [2]·(R[2] [+] R[3]) (ADD)
**Étape 4 :** Retourner R[1]

**Algorithme A6" - Multiplication par un scalaire "Doubles stored & Add Only"**

**Entrée :** *un point P appartenant à la courbe elliptique E sur le corps de Galois $F_q$*
*un scalaire k entier de v bits tel que k = $(k_{v-1} k_{v-2}... k_0)_2$, codé en*

NAF**Requiert :** *un ensemble R de $2^m$-1 registres de la taille du point P (m>2)*

*un ensemble de $\left| \dfrac{v}{m} \right|$ registres DP de la taille du point P tels que DP[i] = $[2^{m \cdot j}]\cdot P$, avec* $0 \leq i < \left| \dfrac{v}{m} \right|$

**Sortie :** *[k]·P*

**Étape 1 :** pour j allant de 1 à $2^m$-1, faire R[j] = 0

**Étape 2 :** pour i allant de 0 à $\left| \dfrac{v}{m} \right| - 1$, faire :

$$\text{Étape 2.1} : u = \sum_{j=0}^{m-1} 2^j \cdot k_{m \cdot i + j} \quad (\text{avec } k_i = 0 \text{ si } i > v-1)$$

**Étape 2.2 :** si $u \geq 1$ alors R[u] = R[u] [+] DP[i] (ADD)

**Étape 2.3 :** si $u \leq -1$ alors R[u] = R[-u] [-] DP[i] (ADD)

$$\text{Etape 3} : R[1] = \left| \sum_{j=1}^{2^m-1} \lfloor j \rfloor \cdot R[j] \right| \quad (\text{ADD})$$

**Étape 4 :** Retourner R[1]

## Revendications

**1.** Procédé de traitement cryptographique de données, mis en oeuvre dans un dispositif électronique (DV1) comprenant un processeur (PROC), le procédé comprenant des étapes de fourniture d'un point d'une courbe elliptique dans un corps de Galois, et d'un premier nombre entier, et de calcul d'une multiplication scalaire du point par le premier nombre, les coordonnées du point et le premier nombre ayant une taille supérieure à la taille de mots susceptibles d'être traités directement par le processeur,
**caractérisé en ce que** le calcul de multiplication scalaire du point par le premier nombre, comprend des étapes consistant à :

mémoriser une série de points multiples résultant chacun du produit scalaire du point par 2 élevé à une puissance appartenant à une série de nombres entiers,
initialiser un point résultant appartenant à la courbe elliptique,
exécuter plusieurs itérations pour prendre en compte une seule fois chacun des bits du premier nombre, chaque itération comprenant un calcul d'une combinaison de plusieurs bits du premier nombre, et lorsque la combinaison est non nulle, un calcul d'addition entre le point résultant et l'un des points multiples mémorisés correspondant aux rangs des bits de la combinaison de bits du premier nombre, et
fournir en sortie du processeur le point résultant en tant que résultat du calcul de multiplication scalaire du point par le premier nombre.

**2.** Procédé selon la revendication 1, dans lequel les bits du premier nombre sont pris en compte dans un ordre aléatoire ou pseudo-aléatoire lors du calcul du point résultant.

**3.** Procédé selon l'une des revendications 1 à 2, dans lequel les calculs d'addition entre le point résultant et les multiples mémorisés sont effectués en coordonnées affines.

**4.** Procédé selon l'une des revendications 1 à 2, dans lequel les calculs d'addition entre le point résultant et les résultats mémorisés sont effectués en coordonnées projectives.

**5.** Procédé selon la revendication 4, dans lequel les multiples scalaires du point sont mémorisés en coordonnées affines, et les résultats obtenus étant transformés en coordonnées projectives par ajout aux coordonnées affines, d'une troisième coordonnée ayant une valeur fixée à un.

**6.** Procédé selon l'une des revendications 1 à 5, dans lequel le premier nombre et les coordonnées du point sont codés en NAF, le procédé comprenant pour chaque bit égal à -1 ou combinaison de bits inférieure ou égale à -1, du premier nombre, un calcul d'addition entre le point résultant et l'opposé du multiple mémorisé correspondant au rang du bit égal à -1 ou de la combinaison de bits inférieure ou égale à -1, du premier nombre.

**7.** Procédé selon l'une des revendications 1 à 6, comprenant une étage de génération d'une paire de clés privée et publique, comportant des étapes consistant à :

choisir aléatoirement un second nombre en tant que clé privée,
choisir en tant que point de base un point d'une courbe elliptique, les multiples mémorisés ayant été calculés à partir du point de base, et

calculer le point résultant de la multiplication scalaire du point de base par le second nombre en utilisant les points multiples mémorisés, le point résultant ou l'une de ses coordonnées, étant choisi en tant que clé publique correspondant à la clé privée.

8. Procédé selon l'une des revendications 1 à 7, comprenant une étage de signature d'un message, comportant des étapes consistant à :

choisir aléatoirement un second nombre,
choisir en tant que point de base un point d'une courbe elliptique, les multiples mémorisés ayant été calculés à partir du point de base, et
calculer le point résultant, issu de la multiplication scalaire du point de base par le second nombre en utilisant les multiples mémorisés,
appliquer une fonction de hachage au message à signer, et
calculer la signature du message par les équations suivantes :

$$x = i \bmod n$$

$$y = k^{-1}(H(m)+sx) \bmod n,$$

dans lesquelles x et y représentent la signature du message m, i étant une coordonnée du point résultant, k étant le second nombre, H(m) la fonction de hachage appliquée au message m, s un nombre utilisé comme clé privée, et n étant le plus petit entier positif tel que le produit scalaire de n par le point de base est égal au point à l'infini de la courbe elliptique.

9. Dispositif électronique (DV1) comprenant un processeur (PROC), configuré pour mettre en oeuvre le procédé selon l'une des revendications 1 à 8.

10. Dispositif selon la revendication 9, **caractérisé en ce qu'**il est portable et autonome, ou de type carte à puce.


**Patentansprüche**

1. Verfahren zur kryptographischen Datenverarbeitung, das in einer elektronischen Vorrichtung (DV1) angewendet wird, die einen Prozessor (PROC) enthält, wobei das Verfahren Schritte des Lieferns eines Punkts einer elliptischen Kurve in einem Galoiskörper und einer ersten ganzen Zahl und der Berechnung einer skalaren Multiplikation des Punkts mit der ersten Zahl enthält, wobei die Koordinaten des Punkts und die erste Zahl eine größere Größe haben als die Größe von Wörtern, die direkt vom Prozessor verarbeitet werden können, **dadurch gekennzeichnet, dass** die Berechnung der skalaren Multiplikation des Punkts mit der ersten Zahl Schritte enthält, die darin bestehen:

eine Reihe von Vielfachpunkten zu speichern, die je aus dem skalaren Produkt des Punkts mit 2 hoch eine Zahl resultieren, die zu einer Reihe von ganzen Zahlen gehört,
Initialisieren eines resultierenden Punkts, der zur elliptischen Kurve gehört,
Ausführen mehrerer Iterationen, um jedes der Bits der ersten Zahl nur einmal zu berücksichtigen, wobei jede Iteration eine Berechnung einer Kombination von mehreren Bits der ersten Zahl enthält, und wenn die Kombination ungleich Null ist, eine Additionsberechnung zwischen dem resultierenden Punkt und einem der gespeicherten Vielfachpunkte, der den Rängen der Bits der Kombination von Bits der ersten Zahl entspricht, und
Liefern am Ausgang des Prozessors des resultierenden Punkts als Ergebnis der Berechnung der skalaren Multiplikation des Punkts mit der ersten Zahl.

2. Verfahren nach Anspruch 1, wobei die Bits der ersten Zahl bei der Berechnung des resultierenden Punkts in einer zufälligen oder pseudo-zufälligen Reihenfolge berücksichtigt werden.

3. Verfahren nach einem der Ansprüche 1 bis 2, wobei die Additionsberechnungen zwischen dem resultierenden Punkt und den gespeicherten Vielfachen in affinen Koordinaten ausgeführt werden.

**4.** Verfahren nach einem der Ansprüche 1 bis 2, wobei die Additionsberechnungen zwischen dem resultierenden Punkt und den gespeicherten Ergebnissen in projektiven Koordinaten ausgeführt werden.

**5.** Verfahren nach Anspruch 4, wobei die skalaren Vielfache des Punkts in affinen Koordinaten gespeichert werden, und die erhaltenen Ergebnisse in projektive Koordinaten durch Hinzufügen zu den affinen Koordinaten einer dritten Koordinate umgewandelt werden, die einen auf Eins festgelegten Wert hat.

**6.** Verfahren nach einem der Ansprüche 1 bis 5, wobei die erste Zahl und die Koordinaten des Punkts NAFcodiert werden, wobei das Verfahren für jedes Bit gleich -1 oder Kombination von Bits geringer als oder gleich -1 der ersten Zahl eine Additionsberechnung zwischen dem resultierenden Punkt und dem Negativen des gespeicherten Vielfachen entsprechend dem Rang des Bits gleich -1 oder der Kombination von Bits geringer als oder gleich -1 der ersten Zahl enthält.

**7.** Verfahren nach einem der Ansprüche 1 bis 6, das eine Stufe der Erzeugung eines Paars von privatem und öffentlichem Schlüssel enthält, die Schritte aufweist, die darin bestehen:

eine zweite Zahl zufällig als privaten Schlüssel zu wählen,
als Basispunkt einen Punkt einer elliptischen Kurve zu wählen, wobei die gespeicherten Vielfachen ausgehend vom Basispunkt berechnet wurden, und
den resultierenden Punkt der skalaren Multiplikation des Basispunkts mit der zweiten Zahl zu berechnen, indem die gespeicherten Vielfachpunkte verwendet werden, wobei der resultierende Punkt oder eine seiner Koordinaten als dem privaten Schlüssel entsprechender öffentlicher Schlüssel gewählt wird.

**8.** Verfahren nach einem der Ansprüche 1 bis 7, das einen Schritt der Signatur einer Nachricht aufweist, das Schritte aufweist, die darin bestehen:

eine zweite Zahl zufällig zu wählen,
als Basispunkt einen Punkt einer elliptischen Kurve zu wählen, wobei die gespeicherten Vielfachen ausgehend vom Basispunkt berechnet wurden, und
den aus der skalaren Multiplikation des Basispunkts mit der zweiten Zahl stammenden Punkt zu berechnen, indem die gespeicherten Vielfachen verwendet werden,
eine Hash-Funktion an die zu signierende Nachricht anzuwenden, und
die Signatur der Nachricht durch die folgenden Gleichungen zu berechnen:

$$x = i \bmod n$$

$$y = k^{-1}(H(m)+sx) \bmod n,$$

wobei x und y die Signatur der Nachricht m darstellen, i eine Koordinate des resultierenden Punkts ist, k die zweite Zahl ist, H(m) die an die Nachricht m angewendete Hash-Funktion ist, s eine als privater Schlüssel verwendete Zahl ist, und n die kleinste positive ganze Zahl ist, so dass das skalare Produkt von n mit dem Basispunkt gleich dem Punkt im Unendlichen der elliptischen Kurve ist.

**9.** Elektronische Vorrichtung (DV1), die einen Prozessor (PROC) enthält, konfiguriert, das Verfahren nach einem der Ansprüche 1 bis 8 anzuwenden.

**10.** Vorrichtung nach Anspruch 9, **dadurch gekennzeichnet, dass** sie tragbar und autonom oder von der Art Chipkarte ist.

**Claims**

**1.** A cryptographic data processing method, implemented in an electronic device (DV1) comprising a processor (PROC), the method comprising steps of providing a point of an elliptic curve in a Galois field, and a first whole number, and of calculating a scalar multiplication of the point by the first number, the coordinates of the point and the first number having a size greater than the size of words that may be processed directly by the processor,
**characterized in that** the scalar multiplication calculation of the point by the first number comprises steps of:

storing a series of multiple points each resulting from the scalar product of the point by 2 raised to a power belonging to a series of whole numbers,
setting a resulting point belonging to the elliptic curve,
executing several iterations to take into account each of the bits of the first number only once, each iteration comprising a calculation of a combination of several bits of the first number, and if the combination is non-zero, an addition between the resulting point and one of the stored multiple points corresponding to ranks of the bits of the combination of bits of the first number, and
providing at the output of the processor the resulting point as result of the scalar multiplication calculation of the point by the first number.

2. Method according to claim 1, wherein the bits of the first number are taken into account in a random or pseudo-random order when calculating the resulting point.

3. Method according to one of claims 1 and 2, wherein the adding calculations between the resulting point and the stored multiples are performed in affine coordinates.

4. Method according to one of claims 1 and 2, wherein the adding calculations between the resulting point and the stored results are performed in projective coordinates.

5. Method according to claim 4, wherein the scalar multiples of the point are stored in affine coordinates, and the results obtained are transformed into projective coordinates by adding to the affine coordinates a third coordinate having a value set to 1.

6. Method according to one of claims 1 to 5, wherein the first number and the coordinates of the point are NAF coded, the method comprising for each bit equal to -1 or combination of bits lower than or equal to -1, of the first number, an adding calculation between the resulting point and the opposite of the stored multiple corresponding to the rank of the bit equal to -1 or of the combination of bits lower than or equal to -1, of the first number.

7. Method according to one of claims 1 to 6, comprising a stage of generating a pair of private and public keys, comprising steps of:

randomly choosing a second number as private key,
choosing as base point a point of an elliptic curve, the stored multiples having been calculated from the base point, and
calculating the resulting point of the scalar multiplication of the base point by the second number using the multiple points stored, the resulting point or one of its coordinates being chosen as public key corresponding to the private key.

8. Method according to one of claims 1 to 7, comprising a stage for signing a message, comprising steps of:

randomly choosing a second number,
choosing as base point a point of an elliptic curve, the stored multiples having been calculated from the base point, and
calculating the resulting point, coming from the scalar multiplication of the base point by the second number using the stored multiples,
applying a hashing function to the message to be signed, and
calculating the signature of the message by the following equations:

$$x = i \bmod n$$

$$y = k^{-1}(H(m)+sx) \bmod n,$$

in which x and y represent the signature of the message m, i being a coordinate of the resulting point, k being the second number, H(m) the hashing function applied to the message m, s a number used as private key, and n being the smallest positive whole number such that the scalar product of n by the base point is equal to the point at infinity of the elliptic curve.

9. An electronic device (DV1) comprising a processor (PROC), configured to implement the method according to one of claims 1 to 8.

10. Device according to claim 9, **characterized in that** it is portable and autonomous, or of smart card type.

Figure unique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JEAN-SÉBASTIEN CORON.** A New DPA Counter-measure Based on Permutation Tables. *SCN,* 2008, 278-292